# EUROPÄISCHE PATENTANMELDUNG

(11) **EP 4 759 210 A1**
(43) Veröffentlichungstag der Anmeldung: **17.06.2026**
(21) Anmeldenummer: 25216209.4
(22) Anmeldetag: 17.11.2025
(51) Int. Cl.: A47J 37/07

(54) **VORRICHTUNG, VORZUGSWEISE OUTDOOR-GARGERÄT, BESONDERS VORZUGSWEISE OUTDOOR-GRILLGERÄT, GANZ BESONDERS VORZUGSWEISE OUTDOOR-GASGRILL**

(30) Priorität: 11.12.2024 DE 102024137234
(71) Anmelder: Miele & Cie. KG, 33332 Gütersloh (DE)
(72) Erfinder: Grothues, Leon, 48336 Sassenberg (DE); Hollingsworth, Peter, 44225 Dortmund (DE)

(57) **Zusammenfassung**

Die Erfindung betrifft eine Vorrichtung (1), vorzugsweise ein Outdoor-Gargerät (1), besonders vorzugsweise ein Outdoor-Grillgerät (1), ganz besonders vorzugsweise ein Outdoor-Gasgrill (1), mit wenigstens einem ersten Drehknopf (5), welcher ausgebildet ist, von einer Person zum Betreiben der Vorrichtung (1) mit einer Hand gedreht zu werden, wobei der erste Drehknopf (5) mit der Hand auf eine drehbare Knopfaufnahme (12) aufsteckbar sowie von der drehbaren Knopfaufnahme (12) abziehbar ist. Die Vorrichtung (1) ist dadurch gekennzeichnet, dass der erste Drehknopf (5) ausgebildet ist,
• im aufgesteckten Zustand eine Verbindung der Vorrichtung (1) zu schließen, um ein Betreiben der Vorrichtung (1) zu ermöglichen, und
• im abgezogenen Zustand die Verbindung der Vorrichtung (1) zu öffnen, um ein Betreiben der Vorrichtung (1) zu verhindern.

## Beschreibung

Die Erfindung betrifft eine Vorrichtung, vorzugsweise ein Outdoor-Gargerät, besonders vorzugsweise ein Outdoor-Grillgerät und ganz besonders vorzugsweise einen Outdoor-Gasgrill.

Die Zubereitung von Nahrungsmitteln erfolgt seit langer Zeit in speziellen Räumen von Gebäuden, welche als Küche bezeichnet werden. Dort sind entsprechend Küchengeräte zur Zubereitung sowie zur Lagerung von Speisen stationär vorgesehen, d.h. feststehend angeordnet bzw. in Küchenzeilen eingebaut. Zu diesen Küchengeräten gehören beispielsweise Kochfelder und Backöfen sowie Kühlschränke.

Ebenso wird zur Zubereitung von Nahrungsmitteln seit langer Zeit das Grillen angewendet. Beim Grillen wird das Gargut im Wesentlichen durch Wärmestrahlung gegart und an der Oberfläche geröstet. Das Durchgaren wird durch die Wärmeleitung, auch Konduktion genannt, von der Oberfläche des Garguts in das Gargut hinein bewirkt.

Das Grillen kann über einem offenen Feuer erfolgen, was daher üblicherweise im Freien praktiziert wird. Das offene Feuer kann durch brennbare Materialien wie z.B. durch Holzkohle aber auch durch Gas erzeugt werden. Als Hitzequelle dienen somit Holzfeuer oder Holzglut bzw. die Gasflamme. Das Grillen im Freien kann mit einem nicht unerheblichen Aufwand verbunden sein, müssen doch ein Grillgerät, Brennmaterial bzw. eine Gasquelle und das Grillgut etc. ins Freie transportiert, dort aufgebaut, betrieben und später wieder abgebaut und abtransportiert werden.

Alternativ kann das Grillen auch über ein elektrisch betreibbares Grillgerät mittels elektrischer Heizschleifen erfolgen, welches auch als elektrisches Grillgerät bezeichnet werden kann. Dies bringt den Vorteil mit sich, dass aufgrund der Vermeidung eines offenen Feuers diese Art des Grillens auch im Haus durchgeführt werden kann. Hierzu können mobile oder stationäre elektrische Grillgeräte verwendet werden. Es ist jedoch auch die Beheizung von Grillgeräten für den Außenbereich mit elektrisch betriebener Hitzequelle bekannt.

Elektrogrills erfreuen sich dabei auch im Außenbereich, d.h. Outdoor, wachsender Beliebtheit, da diese im Vergleich zu mit Gas oder Kohle betriebenen Grills verschiedene Vorteile aufweisen. Insbesondere die einfache Handhabung, das vergleichsweise schnelle Aufheizverhalten und die geringen Emissionen z.B. aufgrund gar keiner bzw. lediglich geringer Feinstaubentwicklung gehören dazu. Auch entfällt der Aufwand, Holzkohle oder Gasflaschen zu beschaffen, zu lagern, zu transportieren sowie am Ort der Benutzung des Grills verstauen zu müssen, was auch den Anblick des Grills beeinträchtigen kann.

Es ist heutzutage auch bekannt, weitere Möglichkeiten zur Zubereitung von Speisen vergleichbar dem bekannten Grillgerät nach außerhalb der Küche bzw. nach außerhalb des Hauses zu verlagern. Entsprechend werden derartige Gargeräte als Outdoor-Küchen bezeichnet, welche vergleichbar den Gargeräten in der Küche im Inneren eines Hauses, auch Indoor-Küchen genannt, mit Gas oder elektrisch betrieben werden. Derartige Outdoor-Küchen können neben einem Grillgerät auch ein Kochfeld und einen Ofen sowie Staumöglichkeiten, einen Kühlschrank und ein Spülbecken aufweisen. Auch bei Outdoor-Küchen können die o.g. Vorteile elektrischer Grillgeräte umgesetzt und genutzt werden. In jedem Fall stellt üblicherweise das Outdoor-Grillgerät das Grundelement bzw. das "Herzstück" einer Outdoor-Küche dar.

Outdoor-Grillgeräte sowie Outdoor-Küchen sind jedoch auch gasbetrieben weit verbreitet. Gasbetriebene Outdoor-Grillgeräte, auch Gasgrillgeräte bzw. Outdoor-Gasgrillgeräte genannt, können trotz der Verwendung von Gas als Brennmaterial einen elektrischen 230V-Netzanschluss aufweisen, um eine elektrische Zündung zum Entflammen des Gases zu nutzen.

Nachteilig bei derartigen Outdoor-Küchen sowie bei derartigen separaten bzw. einzelnen Outdoor-Grillgeräten ist bisher, dass diese, insbesondere falls sie gasbetrieben sind, tendenziell ein höheres Gefährdungsrisiko aufweisen als elektrisch betriebene Indoor-Geräte.

Zudem sind die Outdoor-Küchen bzw. die Outdoor-Grillgeräte üblicherweise für Kinder frei zugänglich und häufig unbeaufsichtigt, da derartige Geräte während der Jahreszeiten der Benutzung üblicherweise durchgängig auf der Terrasse oder dergleichen stehen. Es besteht somit die Gefahr, dass Kinder unbeaufsichtigt die Outdoor-Küche bzw. den Outdoor-Grill starten, betreiben und somit eine Gefährdungssituation entsteht. Typischerweise kann jeder Gasgrill mit wenigen Handgriffen auch durch Kinder gestartet und betrieben werden. Absicherungen und insbesondere Kindersicherungen gegen eine derartige Inbetriebnahme sind bisher nicht bekannt, höchstens Warnschilder bzw. Warnaufkleber sowie Hinweise in der Gebrauchsanleitung.

Nachteilig ist bei derartigen Outdoor-Küchen sowie Outdoor-Grillgeräten, insbesondere falls diese gasbetrieben sind, ferner, dass diese vergleichsweise teuer in der Anschaffung sind. Somit besteht bei, insbesondere gasbetriebenen, Outdoor-Küchen sowie Outdoor-Grillgeräten ein höheres Risiko eines Diebstahls als bei anderen Objekten. Das Diebstahlrisiko wird dadurch begünstigt, dass Outdoor-Küchen sowie Outdoor-Grillgeräte auch nachts sowie über die Urlaubszeit draußen stehen und somit leichter zugänglich für Diebe sind als Objekte im Haus.

Dies Nachteile können auch für andere Vorrichtungen gelten.

Dabei sind zur Bedienung von technischen Geräten bzw. zur Einstellung von Betriebsparametern von technischen Geräten sog. Drehregler bekannt, welche auch als Drehsteller oder umgangssprachlich als Drehknopf bezeichnet werden. Ein Drehregler stellt ein vergleichsweise kleines sowie durch Drehung einstellbares Bedienelement dar, welches mittels unterschiedlicher Funktionsprinzipien umgesetzt werden können. So werden bei elektrischen Drehreglern üblicherweise Potentiometer eingesetzt, um die Drehstellung des Drehreglers gegenüber dem technischen Gerät zu erfassen, so dass eine Funktion in Abhängigkeit der vom Benutzer gewählten Drehstellung ausgeführt werden kann, beispielsweise zum Dimmen eines Leuchtmittels. Mechanische Drehregler können beispielsweise als kleine Bedienelemente für Ventile umgesetzt werden. Zu beachten ist dabei, dass es sich bei Drehreglern entgegen der Bezeichnung als "Regler" nicht um eine Regelung handelt. Vielmehr stellt ein Drehregler ein rein steuerndes Stellglied dar.

Drehregler werden beispielsweise bei Küchengeräten wie beispielsweise bei Kochfeldern, Backöfen, Mikrowellen, Grillgeräte und dergleichen verwendet, um als Parameter insbesondere die Leistung bzw. die Leistungsstufe einzustellen. Dies gilt für elektrisch betreibbare Kochfelder bzw. Grillgeräte ebenso wie für Gaskochfelder bzw. Gasgrillgeräte. Bei Küchengeräten werden die Drehregler üblicherweise als Drehknöpfe, als Drehknebel, als Bedienknebel bzw. kurz nur als Knebel oder auch als Knauf bezeichnet.

Spezielle Diebstahlsicherungen für Outdoor-Küchen sowie Outdoor-Grillgeräte sind bisher nicht bekannt. Es könnten lediglich mechanische Schlösser und dergleichen als Diebstahlsicherung verwendet werden, welche jedoch vom Dieb mit etwas Aufwand überwunden werden können, so dass die Outdoor-Küche bzw. das Outdoor-Grillgerät dann ohne Einschränkung für den Dieb nutzbar wäre.

Der Erfindung stellt sich somit das Problem, ganz allgemein die Möglichkeiten einer Kindersicherung und bzw. oder einer Diebstahlsicherung für Vorrichtungen zu verbessern. Vorzugsweise soll ein Outdoor-Gargerät und insbesondere ein Outdoor-Grillgerät oder eine Outdoor-Küche zur Verfügung gestellt werden, welche kindersicherer und bzw. oder diebstahlsicherer als bisher bekannt ist. Insbesondere soll die Vorrichtung bzw. das Outdoor-Gargerät in einen nicht-funktionellen Zustand gebracht werden können, um eine Inbetriebnahme bzw. einen Betrieb durch Unbefugte wie Kinder und bzw. oder Diebe zu verhindern. In jedem Fall soll der Betrieb durch den Benutzer bzw. durch den Besitzer weiterhin sowie schnell und einfach möglich sein. Vorzugsweise soll zusätzlich oder alternativ eine Not-Aus-Funktion bereitgestellt werden. Dies soll vorzugsweise möglichst einfach, kostengünstig, flexibel umsetzbar, optisch unauffällig, kompakt und bzw. oder verlässlich erfolgen können. Zumindest soll eine Alternative zu den bekannten derartigen Vorrichtungen bzw. Outdoor-Gargeräten geschaffen werden.

Erfindungsgemäß wird dieses Problem durch eine Vorrichtung sowie durch einen ersten Drehknopf mit den Merkmalen der unabhängigen Patentansprüche gelöst. Vorteilhafte Ausgestaltungen und Weiterbildungen der Erfindung ergeben sich aus den nachfolgenden abhängigen Ansprüchen.

Somit betrifft die Erfindung eine Vorrichtung, vorzugsweise ein Outdoor-Gargerät, besonders vorzugsweise ein Outdoor-Grillgerät und ganz besonders vorzugsweise einen Outdoor-Gasgrill mit wenigstens einem ersten Drehknopf, welcher ausgebildet ist, von einer Person zum Betreiben der Vorrichtung mit einer Hand gedreht zu werden, wobei der erste Drehknopf mit der Hand auf eine drehbare Knopfaufnahme aufsteckbar sowie von der drehbaren Knopfaufnahme abziehbar ist. Unter einem Betreiben der Vorrichtung durch das Drehen des ersten Drehknopfes ist zu verstehen, dass die Vorrichtung hierdurch in Betrieb genommen bzw. in einen nutzbaren Betriebszustand versetzt werden kann, was auch als Einschalten bezeichnet werden kann, vorzugsweise aus einem vollkommen untätigen bzw. ausgeschalteten Zustand heraus. Dies kann je nach Vorrichtung dazu führen, dass die Vorrichtung mit einer elektrischen Energieversorgung verbunden bzw. eine galvanische Trennung gegenüber einer elektrischen Energieversorgung aufgehoben wird. Dies kann auch das Zünden eines Funkens eines Gasgrills umfassen.

In jedem Fall ist die Vorrichtung dadurch gekennzeichnet, dass der erste Drehknopf ausgebildet ist,
- im aufgesteckten Zustand eine Verbindung der Vorrichtung zu schließen, um ein Betreiben der Vorrichtung zu ermöglichen, und
- im abgezogenen Zustand die Verbindung der Vorrichtung zu öffnen, um ein Betreiben der Vorrichtung zu verhindern.

Somit kann erfindungsgemäß der erste Drehknopf, welcher vorzugsweise zwecks Reinigung bei Gargeräten als Vorrichtung ohnehin abziehbar sein kann, dafür genutzt werden, sowohl eine Kindersicherung als auch eine Diebstahlsicherung ganz einfach zu ermöglichen. Hierzu ist die Weiterbildung bekannter derartiger Vorrichtungen mit Drehknöpfen dahingehend möglich, dass zwischen den beiden Zuständen, ob der erste Drehknopf auf die drehbare Knopfaufnahme aufgesteckt oder von der drehbaren Knopfaufnahme abgezogen ist, unterschieden werden und die Vorrichtung in Abhängigkeit dieser beiden Zustände betreibbar sein kann oder nicht. Dies kann technisch vielfältig umgesetzt werden, wie nachfolgend näher beschrieben werden wird.

Gemäß einem Aspekt der Erfindung ist die Verbindung eine elektrisch leitfähige Verbindung. Dies kann eine besonders einfache Art und Weise der Umsetzung darstellen, indem durch das Abziehen des ersten Drehknopfes ein Stromkreis unterbrochen und durch das Aufstecken des ersten Drehknopfes der Stromkreis wieder geschlossen werden kann. Dabei kann das Öffnen und Schließen des Stromkreises bzw. eines zentralen Stromkreises der Vorrichtung an einer beliebigen Stelle entlang des Stromkreises erfolgen, was die Gestaltungsmöglichkeiten erhöhen kann.

Andererseits kann eine Unterbrechung des Stromkreises durch das Abziehen des ersten Drehknopfs auch vergleichsweise einfach als Diebstahlsicherung umgegangen werden, indem durch einen elektrisch leitfähigen Draht oder dergleichen die durch den abgezogenen Drehknopf bewirkte Unterbrechung überbrückt und hierdurch aufgehoben wird.

Gemäß einem weiteren Aspekt der Erfindung weist der drehbare Knopfaufnahme ein Paar von elektrisch leitfähigen Kontakten auf, wobei der erste Drehknopf eine Aussparung aufweist, um auf die Knopfaufnahme aufgesteckt zu werden, wobei die Aussparung des ersten Drehknopfs eine elektrisch leitfähige Brücke aufweist, welche ausgebildet ist, im aufgesteckten Zustand das Paar von elektrisch leitfähigen Kontakten der Knopfaufnahme elektrisch leitfähig zu verbinden. Dies kann eine konkrete Möglichkeit der Umsetzung darstellen, wie zuvor bereits beschrieben.

Gemäß einem weiteren Aspekt der Erfindung ist die elektrisch leitfähige Verbindung ausgebildet, einen Stromkreis einer Steuerungseinheit zum Steuern der Vorrichtung, einen Stromkreis einer elektrischen Energieversorgung zum Speisen der Vorrichtung und bzw. oder einen Stromkreis zum Betreiben der Vorrichtung zu schließen und zu öffnen. Dies kann eine konkrete Möglichkeit der Umsetzung darstellen, wie zuvor bereits beschrieben.

Gemäß einem weiteren Aspekt der Erfindung ist die Verbindung eine induktive, kapazitive und bzw. oder galvanische Kopplung. Dies kann eine alternative Möglichkeit bzw. können alternative Möglichkeiten darstellen, eine Unterscheidung zwischen einer vorhandenen oder getrennten Verbindung wie zuvor beschrieben umzusetzen. Dabei können diese Arten von Kopplung, ob einzeln oder in Kombination miteinander, die Gestaltungsmöglichkeiten erhöhen und insbesondere schwieriger und möglichst gar nicht für einen Dieb überbrückbar bzw. überwindbar sein. Nachteiligerweise kann dies jedoch den Aufwand der Umsetzung und damit die Kosten, den Bauraum, die Fehleranfälligkeit bzw. die Gefahr von Beschädigung und Ausfall und dergleichen erhöhen.

Gemäß einem weiteren Aspekt der Erfindung weist der erste Drehknopf eine Aussparung auf, um auf die Knopfaufnahme aufgesteckt zu werden, wobei die Aussparung des ersten Drehknopfs ausgebildet ist, im aufgesteckten Zustand die induktive, kapazitive und bzw. oder galvanische Kopplung herzustellen. Dies kann eine konkrete Möglichkeit der Umsetzung darstellen, wie zuvor bereits vergleichbar beschrieben.

Gemäß einem weiteren Aspekt der Erfindung weist die Vorrichtung ferner eine Steuerungseinheit auf, welche ausgebildet ist, die induktive, kapazitive und bzw. oder galvanische Kopplung zu erkennen, wobei die Steuerungseinheit ferner ausgebildet ist,
- bei erkannter induktiver, kapazitiver und bzw. oder galvanischer Kopplung ein Betreiben der Vorrichtung zu ermöglichen, und
- bei nicht-erkannter induktiver, kapazitiver und bzw. oder galvanischer Kopplung ein Betreiben der Vorrichtung zu verhindern.

Dies kann eine konkrete Möglichkeit der Umsetzung darstellen, wie zuvor bereits vergleichbar beschrieben.

Gemäß einem weiteren Aspekt der Erfindung sind der erste Drehknopf und die Knopfaufnahme hinsichtlich ihrer induktiven, kapazitiven und bzw. oder galvanischen Kopplung zueinander passend ausgebildet. Dies kann zwar den Aufwand erhöhen sowie zum Risiko führen, dass bei Verlust des individuell zur Vorrichtung passenden ersten Drehknopfs kein anderer mechanisch passender Drehknopf verwendet werden, sondern die Vorrichtung nicht mehr betrieben werden kann, ggfs. bis zum Austausch der Knopfaufnahme. Vorteilhaft ist hierbei jedoch, dass der abgezogene Drehknopf nicht einfach elektrisch leitend überbrückt werden kann, so dass eine verbesserte Diebstahlsicherung geschaffen werden kann.

Gemäß einem weiteren Aspekt der Erfindung ist die Verbindung eine Kommunikationsverbindung. Dies kann eine alternative Möglichkeit darstellen, eine Unterscheidung zwischen einer vorhandenen oder getrennten Verbindung wie zuvor beschrieben umzusetzen. Dies kann zwar den Aufwand weiter erhöhen, jedoch auch die Gestaltungsmöglichkeiten. Insbesondere kann dies einem wirksamen Diebstahlschutz zuträglich sein.

Gemäß einem weiteren Aspekt der Erfindung weist der erste Drehknopf eine Aussparung auf, um auf die Knopfaufnahme aufgesteckt zu werden, wobei die Knopfaufnahme einen drahtlosen Empfänger, vorzugsweise einen RFID-Empfänger, aufweist, und wobei die Aussparung des ersten Drehknopfs einen drahtlosen Sender, vorzugsweise einen **RFID-**Sender aufweist, oder umgekehrt. Dies kann eine konkrete Möglichkeit der Umsetzung darstellen, wie zuvor bereits vergleichbar beschrieben

Gemäß einem weiteren Aspekt der Erfindung weist die Vorrichtung ferner eine Steuerungseinheit auf, welche ausgebildet ist, die Kommunikationsverbindung, vorzugsweise zwischen dem drahtlosen Sender und dem drahtlosen Empfänger, zu erkennen, wobei die Steuerungseinheit ferner ausgebildet ist,
- bei erkannter Kommunikationsverbindung ein Betreiben der Vorrichtung zu ermöglichen, und
- bei nicht-erkannter Kommunikationsverbindung ein Betreiben der Vorrichtung zu verhindern.

Dies kann eine konkrete Möglichkeit der Umsetzung darstellen, wie zuvor bereits vergleichbar beschrieben

Gemäß einem weiteren Aspekt der Erfindung sind der drahtlose Sender und der drahtlose Empfänger, vorzugsweise als RFID-Sender und als RFID-Empfänger, zueinander passend individuell verschlüsselt ausgebildet. Dies kann eine konkrete Möglichkeit der Umsetzung darstellen, wie zuvor bereits vergleichbar beschrieben

Gemäß einem weiteren Aspekt der Erfindung ist der erste Drehknopf ferner zum Einstellen eines Betriebsparameters der Vorrichtung ausgebildet. Somit kann der erste Drehknopf gleich zwei Funktionen erfüllen, so dass ein zweiter separater Drehknopf oder dergleichen zum Einstellen des Betriebsparameters der Vorrichtung vermieden werden kann, was entsprechende Kosten, Bauraum bzw. Platz an einer Bedienblende oder dergleichen der Vorrichtung sparen kann.

Gemäß einem weiteren Aspekt der Erfindung ist der erste Drehknopf ausgebildet, von der Person lediglich zum Betreiben der Vorrichtung mit einer Hand gedreht zu werden, wobei die Vorrichtung ferner wenigstens einen zweiten Drehknopf aufweist, welcher ausgebildet ist, von der Person lediglich zum Einstellen eines Betriebsparameters der Vorrichtung mit der Hand gedreht zu werden, wobei der zweite Drehknopf vorzugsweise ebenfalls mit der Hand aufsteckbar und abziehbar ist. Somit können diese beiden Funktionen voneinander getrennt und durch separate Drehknöpfe ausgeführt werden, was die technische Umsetzung vereinfachen sowie für den Benutzer intuitiver verständlich bzw. bedienbar sein kann.

Die Erfindung betrifft auch einen ersten Drehknopf zur Verwendung bei einer Vorrichtung wie zuvor beschrieben. Somit kann ein erster Drehknopf zur Verfügung gestellt werden, beispielsweise als Ersatzteil bzw. als optisch ansprechendere Alternative zu einem herstellerseitig für die Vorrichtung vorgesehenen ersten Drehknopf, um die zuvor beschriebenen Eigenschaften und Vorteile umzusetzen und zu nutzen.

Mehrere Ausführungsbeispiele der Erfindung sind in den Zeichnungen rein schematisch dargestellt und werden nachfolgend näher beschrieben. Es zeigt
- Figur 1: eine Draufsicht von vorne auf eine erfindungsgemäße Vorrichtung in Form eines Outdoor-Gasgrills;
- Figur 2: die Darstellung der Figur 1 von der linken Seite;
- Figur 3: eine Detaildarstellung im Schnitt durch einen erfindungsgemäßen Outdoor-Gasgrill gemäß eines ersten Ausführungsbeispiels mit aufgestecktem ersten Drehknopf;
- Figur 4: die Darstellung der Figur 3 mit abgezogenem ersten Drehknopf;
- Figur 5: eine Detaildarstellung im Schnitt durch einen erfindungsgemäßen Outdoor-Gasgrill gemäß eines zweiten Ausführungsbeispiels mit aufgestecktem ersten Drehknopf;
- Figur 6: eine Detaildarstellung im Schnitt durch einen erfindungsgemäßen Outdoor-Gasgrill gemäß eines dritten Ausführungsbeispiels mit aufgestecktem ersten Drehknopf;
- Figur 7: eine Detaildarstellung im Schnitt durch einen erfindungsgemäßen Outdoor-Gasgrill gemäß eines vierten Ausführungsbeispiels mit aufgestecktem ersten Drehknopf; und
- Figur 8: die Darstellung der Figur 7 mit abgezogenem ersten Drehknopf.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querachse Y bilden gemeinsam die Horizontale X, Y, welche auch als horizontale Ebene X, Y bezeichnet werden kann.

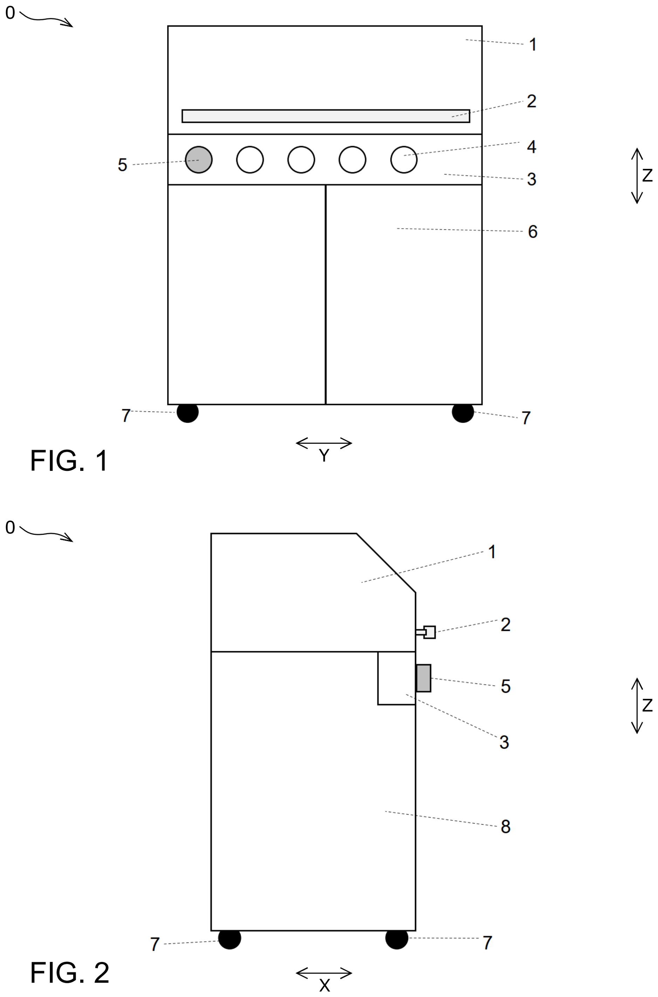

Figur 1 zeigt eine Draufsicht von vorne auf eine erfindungsgemäße Vorrichtung 1 in Form eines Outdoor-Gasgrills 1. Figur 2 zeigt die Darstellung der Figur 1 von der linken Seite.

Der erfindungsgemäße Outdoor-Gasgrill 1 weist ein Gestell (nicht bezeichnet) auf, welches mit vier an den Ecken angeordneten Rollen 7 auf einem Untergrund (nicht dargestellt) wie beispielsweise einer Terrasse aufsteht und dort rollend bewegt werden kann. Im unteren Bereich weist das Gestell auf beiden Seiten Seitenteile 8 sowie nach vorne, d.h. zu einem Benutzer entlang der Längsachse X hin, ein Paar von Fronttüren 6 auf.

Im oberen Bereich weist das Gestell ein Front-Panel 3 mit einem ersten Drehknopf 5 als Zünd- und Bedienknebel 5, um den Zündvorgang oder den Outdoor-Gasgrill 1 zu starten, sowie rechts daneben vier zweite Drehknöpfe 4 auf, welche als Gasknebel-Brenner 4 vier mit Gasflammen beheizbare Garstellen (nicht dargestellt) hinsichtlich der verwendeten Menge des Gases regulieren können, indem jeweils ein Regelventil hinsichtlich der Gaszufuhr des Brenners bzw. der Brenner eingestellt werden kann. Sowohl der Zünd- und Bedienknebel 5 als auch die Gasknebel-Brenner 4 können von einer Person als Benutzer mit einer Hand gegriffen und gedreht werden, um die jeweilige Funktion zu nutzen.

Nach oben schließt der Outdoor-Gasgrill 1 mit einer Haube 1 ab, welche nach hinten schwenkbar dort am Gestell mittels Scharnieren (nicht dargestellt) befestigt ist. Hierzu kann der Benutzer einen Griff 2 verwenden, welcher vorne an der Haube 1 querverlaufend angeordnet ist.

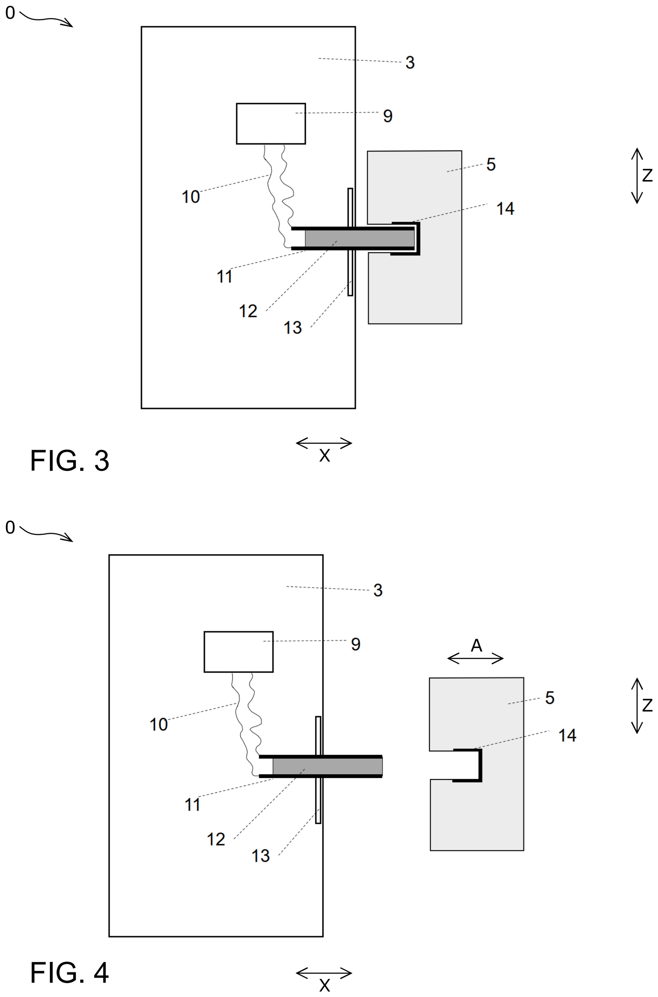

Somit verfügt der Outdoor-Gasgrill 1 über verschiedene äußere Bedienmöglichkeiten in Form des Zünd- und Bedienknebels 5 sowie der Gasknebel-Brenner 4, wie bereits erwähnt. Die Umsetzung der Zündung oder das Einschalten des Outdoor-Gasgrills 1 kann direkt oder indirekt über eine Steuerungseinheit 9 bzw. über eine Elektronik 9 erfolgen. Zudem ist es vorstellbar, dass der Zünd- und Bedienknebel 5 weitere Funktionen beinhaltet oder innerhalb der Gasknebel 4 integriert ist. Der Zünd- und Bedienknebel 5 ist dabei so ausgeführt, dass er von einer Knebelaufnahme 12 mittels einer Abziehbewegung A abgezogen und mittels einer entgegengesetzten Aufsteckbewegung A auf die Knebelaufnahme 12 aufgesteckt werden kann, vgl. Figuren 3 und 4.

Um nun erfindungsgemäß das Zünden der Brenner zu verhindern, wenn der Zünd- und Bedienknebel 5 von dem Outdoor-Gasgrill 1 entfernt wurde, wird gemäß des ersten Ausführungsbeispiels der Figuren 3 und 4 die Elektronik 9 mittels einer elektrischen Verbindungsleitung 10 über zwei elektrische Kontakten 11 an der Knebelaufnahme 12 mit dem Zünd- und Bedienknebel 5 verbunden. In dem abziehbaren Zünd- und Bedienknebel 5 befindet sich eine Brücke 14, die in dem aufgesteckten Zustand einen elektrischen Kontakt zu den Kontakten 11 herstellt und den Stromkreis bis hin zu der Elektronik 9 schließt. Wird der Zünd- und Bedienknebel 5 abgezogen, so wird der elektrische Stromkreis geöffnet und ein Betrieb unterbunden.

Die Elektronik 9 kann dabei eine allgemeine Geräteelektronik, eine Steuerelektronik oder eine Zündelektronik sein. Das Zünden der Brenner kann demnach durch eine Unterbrechung der Stromversorgung für die Elektronik 9, vgl. Figuren 3 und 4, durch eine Unterbrechung des Stromkreises für den Zündfunken oder des Zündgenerators oder durch das Auswerten des Stromkreises (geöffnet / geschlossen) für eine Steuerelektronik verhindert werden.

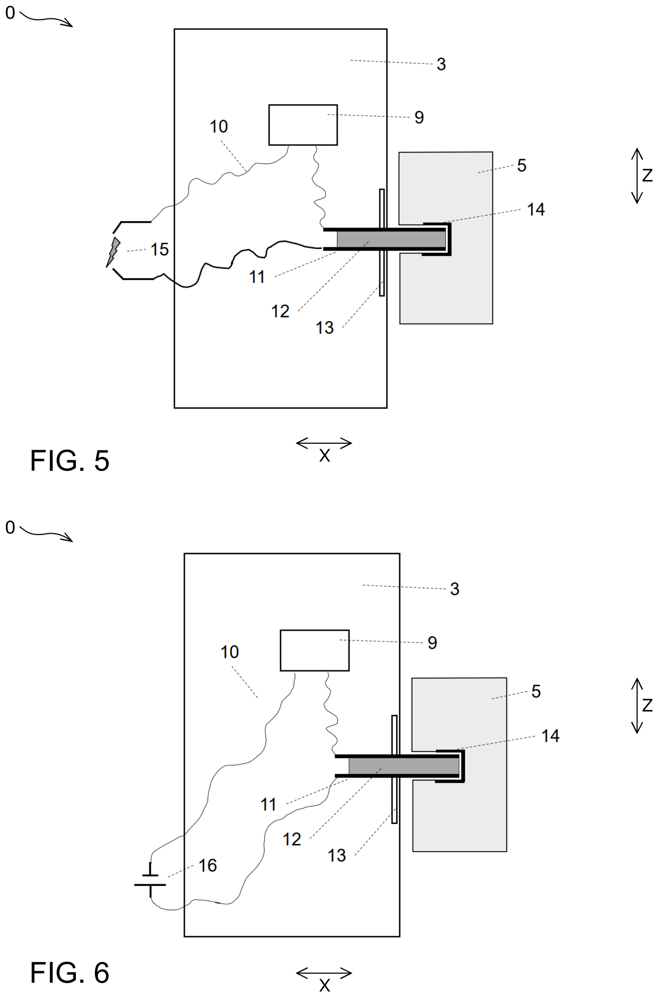

Die elektrischen Verbindungsleitungen 10 müssen somit nicht zwingend direkt mit der Elektronik 9 verbunden sein, sondern können auch mit anderen Komponenten in Verbindung stehen. Figur 5 zeigt bspw. die Ausführung mit einer Kopplung direkt an die Funkenstrecke 15 für die Zündung des Gases. Figur 6 zeigt bspw. die Ausführung mit einer Kopplung an einer Spannungsquelle 16. Weitere Ausführungsmöglichkeiten sind denkbar.

Es ist anzumerken, dass nicht alle Komponenten zwingend in dem oder auch außerhalb des Bereiches des Frontpanels 3 sitzen müssen. Die Ausführung kann je nach Gerätearchitektur unterschiedlich ausfallen.

Die Umsetzung der Knebelerkennung kann ebenfalls weitere konstruktive Lösungsansätze beinhalten, wie bspw. eine induktive oder kapazitive Erkennung oder eine Erkennung über einen Widerstand. Weitere Umsetzungen sind denkbar.

Durch das Abziehen des Zünd- und Bedienknebel 5 ist der Outdoor-Gasgrill 1 nicht mehr funktionstüchtig. Der Betrieb durch Kinder oder anderen Personen ist nicht möglich, wenn diese den Zünd- und Bedienknebel 5 nicht aufstecken. Somit kann diese Funktion als Kindersicherung verwendet werden, um einen unbeaufsichtigten Betrieb des Outdoor-Gasgrills 1 durch Kinder auf einfache Art und Weise verlässlich zu vermeiden. Eine Manipulation des Outdoor-Gasgrills 1 ist erschwert. Die Gefährdung durch unbeaufsichtigte Kinder im Bereich des Outdoor-Gasgrills 1 wird vermieden oder zumindest reduziert.

Dies kann zusätzlich oder alternativ auch als Diebstahlsicherung verwendet werden, wobei eine derartige Sicherung durch einen Dieb mittels eines elektrischen Drahtes oder dergleichen überwunden werden könnte. Der abziehbare Zünd- und Bedienknebel 5 kann somit als eine Art Schlüssel für den Outdoor-Gasgrill 1 dienen. Zusätzlich, je nach konstruktiver Umsetzung, kann der Zünd- und Bedienknebel 5 auch als eine Art Not-Aus eingesetzt werden.

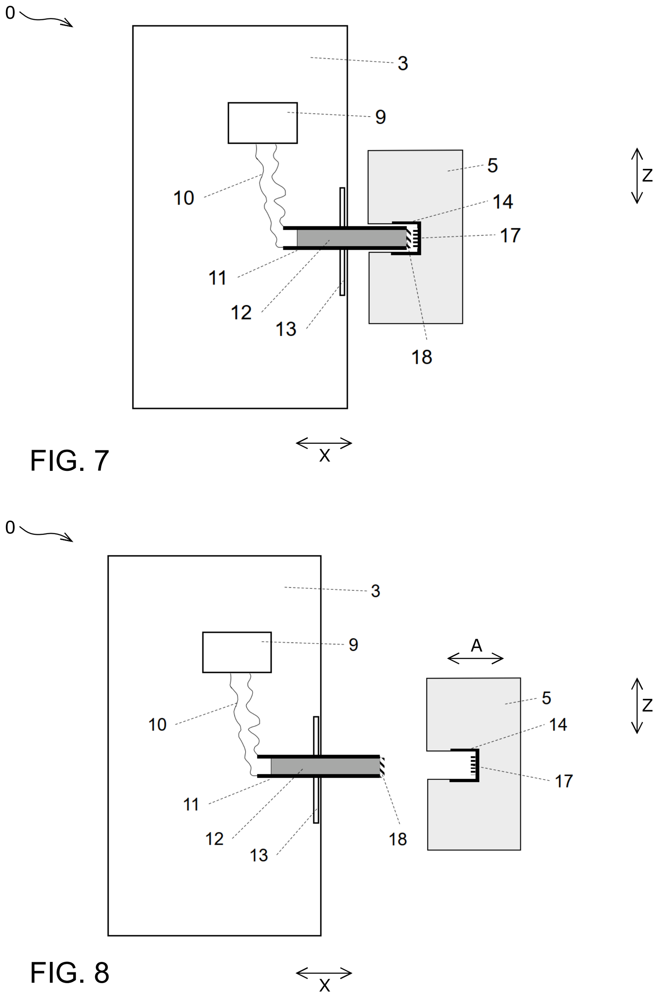

Figur 7 zeigt eine Detaildarstellung im Schnitt durch einen erfindungsgemäßen Outdoor-Gasgrill 1 gemäß eines vierten Ausführungsbeispiels mit aufgestecktem ersten Drehknopf 5 bzw. Zünd- und Bedienknebel 5. Figur 8 zeigt die Darstellung der Figur 7 mit abgezogenem ersten Drehknopf 5 bzw. Zünd- und Bedienknebel 5.

In diesem Fall sind der Zünd- und Bedienknebel 5 sowie die Knebelaufnahme 12 mit einem RFID-System mit RFID-Sender 17 und RFID-Empfänger 18 als mögliche Umsetzungen eines drahtlosen Senders 17 mit einem drahtlosen Empfänger 18 ausgestattet und entsprechend verschlüsselt, sodass der Outdoor-Gasgrill 1 einzig und allein mit dem passenden RFID-Gegenstück gestartet bzw. betrieben werden kann. Hierdurch kann ein einfaches Überbrücken des Outdoor-Gasgrills 1 verhindert werden, was die Diebstahlschutz verbessern kann.

### Bezugszeichenliste (Bestandteil der Beschreibung)

- A: Aufsteck-/Abziehbewegung bzw. -richtung

- X: Längsachse; Tiefe; Länge
- Y: Querachse; Breite
- Z: vertikale Achse; Höhe
- X, Y: Horizontale; horizontale Ebene

- 0: Vorrichtung; Outdoor-Gargerät; Outdoor-Grillgerät; Outdoor-Gasgrill
- 1: Haube
- 2: Griff
- 3: Front-Panel
- 4: zweite Drehknöpfe; Gasknebel-Brenner
- 5: erster Drehknopf; Zünd- und Bedienknebel
- 6: Fronttüren
- 7: Rollen
- 8: Seitenteil
- 9: Steuerungseinheit; Elektronik
- 10: Verbindungsleitung
- 11: Kontakt
- 12: Knopfaufnahme; Knebelaufnahme
- 13: Fixierung
- 14: Brücke
- 15: Funkenstrecke
- 16: elektrische Energieversorgung; Spannungsquelle
- 17: drahtloser Sender; RFID-Sender
- 18: drahtloser Empfänger; RFID-Empfänger

## Patentansprüche

1. Vorrichtung (1), vorzugsweise Outdoor-Gargerät (1), besonders vorzugsweise Outdoor-Grillgerät (1), ganz besonders vorzugsweise ein Outdoor-Gasgrill (1), mit
wenigstens einem ersten Drehknopf (5), welcher ausgebildet ist, von einer Person zum Betreiben der Vorrichtung (1) mit einer Hand gedreht zu werden,
wobei der erste Drehknopf (5) mit der Hand auf eine drehbare Knopfaufnahme (12) aufsteckbar sowie von der drehbaren Knopfaufnahme (12) abziehbar ist,
**dadurch gekennzeichnet, dass**
der erste Drehknopf (5) ausgebildet ist,
• im aufgesteckten Zustand eine Verbindung der Vorrichtung (1) zu schließen, um ein Betreiben der Vorrichtung (1) zu ermöglichen, und
• im abgezogenen Zustand die Verbindung der Vorrichtung (1) zu öffnen, um ein Betreiben der Vorrichtung (1) zu verhindern.

2. Vorrichtung (1) nach Anspruch 1,
wobei die Verbindung eine elektrisch leitfähige Verbindung ist.

3. Vorrichtung (1) nach Anspruch 2,
wobei der drehbare Knopfaufnahme (12) ein Paar von elektrisch leitfähigen Kontakten (11) aufweist,
wobei der erste Drehknopf (5) eine Aussparung aufweist, um auf die Knopfaufnahme (12) aufgesteckt zu werden,
wobei die Aussparung des ersten Drehknopfs (5) eine elektrisch leitfähige Brücke (14) aufweist, welche ausgebildet ist, im aufgesteckten Zustand das Paar von elektrisch leitfähigen Kontakten (11) der Knopfaufnahme (12) elektrisch leitfähig zu verbinden.

4. Vorrichtung (1) nach Anspruch 2 oder 3,
wobei die elektrisch leitfähige Verbindung ausgebildet ist, einen Stromkreis einer Steuerungseinheit (9) zum Steuern der Vorrichtung (1), einen Stromkreis einer elektrischen Energieversorgung (16) zum Speisen der Vorrichtung (1) und/oder einen Stromkreis zum Betreiben der Vorrichtung (1) zu schließen und zu öffnen.

5. Vorrichtung (1) nach Anspruch 1,
wobei die Verbindung eine induktive, kapazitive und/oder galvanische Kopplung ist.

6. Vorrichtung (1) nach Anspruch 5,
wobei der erste Drehknopf (5) eine Aussparung aufweist, um auf die Knopfaufnahme (12) aufgesteckt zu werden,
wobei die Aussparung des ersten Drehknopfs (5) ausgebildet ist, im aufgesteckten Zustand die induktive, kapazitive und/oder galvanische Kopplung herzustellen.

7. Vorrichtung (1) nach Anspruch 5 oder 6,
ferner mit einer Steuerungseinheit (9), welche ausgebildet ist, die induktive, kapazitive und/oder galvanische Kopplung zu erkennen,
wobei die Steuerungseinheit (9) ferner ausgebildet ist,
• bei erkannter induktiver, kapazitiver und/oder galvanischer Kopplung ein Betreiben der Vorrichtung (1) zu ermöglichen, und
• bei nicht-erkannter induktiver, kapazitiver und/oder galvanischer Kopplung ein Betreiben der Vorrichtung (1) zu verhindern.

8. Vorrichtung (1) nach einem der Ansprüche 5 bis 7,
wobei der erste Drehknopf (5) und die Knopfaufnahme (12) hinsichtlich ihrer induktiven, kapazitiven und/oder galvanischen Kopplung zueinander passend ausgebildet sind.

9. Vorrichtung (1) nach Anspruch 1,
wobei die Verbindung eine Kommunikationsverbindung ist.

10. Vorrichtung (1) nach Anspruch 9,
wobei der erste Drehknopf (5) eine Aussparung aufweist, um auf die Knopfaufnahme (12) aufgesteckt zu werden,
wobei die Knopfaufnahme (12) einen drahtlosen Empfänger (18), vorzugsweise einen RFID-Empfänger (18), aufweist, und
wobei die Aussparung des ersten Drehknopfs (5) einen drahtlosen Sender (17), vorzugsweise einen RFID-Sender (17) aufweist, oder umgekehrt.

11. Vorrichtung (1) nach Anspruch 9 oder 10,
ferner mit einer Steuerungseinheit (9), welche ausgebildet ist, die Kommunikationsverbindung, vorzugsweise zwischen dem drahtlosen Sender (17) und dem drahtlosen Empfänger (18), zu erkennen,
wobei die Steuerungseinheit (9) ferner ausgebildet ist,
• bei erkannter Kommunikationsverbindung ein Betreiben der Vorrichtung (1) zu ermöglichen, und
• bei nicht-erkannter Kommunikationsverbindung ein Betreiben der Vorrichtung (1) zu verhindern.

12. Vorrichtung (1) nach einem der Ansprüche 9 bis **11,**
wobei der drahtlose Sender (17) und der drahtlose Empfänger (18), vorzugsweise als RFID-Sender (17) und als RFID-Empfänger (18), zueinander passend individuell verschlüsselt ausgebildet sind.

13. Vorrichtung (1) nach einem der vorangehenden Ansprüche,
wobei der erste Drehknopf (5) ferner zum Einstellen eines Betriebsparameters der Vorrichtung (1) ausgebildet ist.

14. Vorrichtung (1) nach einem der Ansprüche 1 bis 12,
wobei der erste Drehknopf (5) ausgebildet ist, von der Person lediglich zum Betreiben der Vorrichtung (1) mit einer Hand gedreht zu werden,
ferner mit wenigstens einem zweiten Drehknopf (4), welcher ausgebildet ist, von der Person lediglich zum Einstellen eines Betriebsparameters der Vorrichtung (1) mit der Hand gedreht zu werden,
wobei der zweite Drehknopf (4) vorzugsweise ebenfalls mit der Hand aufsteckbar und abziehbar ist.

15. Erster Drehknopf (5) zur Verwendung bei einer Vorrichtung (1) nach einem der vorangehenden Ansprüche.
